Europäisches Patentamt

European Patent Office

Office européen des brevets

(19)

(11) **EP 1 293 073 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(21) Anmeldenummer: **01956264.4**

(22) Anmeldetag: **11.06.2001**

(51) Int Cl.⁷: $H04L\ 27/233$, $H04L\ 25/03$

(86) Internationale Anmeldenummer:
**PCT/DE2001/002200**

(87) Internationale Veröffentlichungsnummer:
**WO 2001/099363 (27.12.2001 Gazette 2001/52)**

(54) **DEMODULATOR FÜR CPFSK-MODULIERTE SIGNALE UNTER VERWENDUNG EINER LINEAREN NÄHERUNG DES CPFSK-SIGNALS**

DEMODULATOR FOR CPFSK-MODULATED SIGNALS BY USE OF A LINEAR APPROXIMATION TO THE CPFSK SIGNAL

DEMODULATEUR POUR SIGNAUX A MODULATION PAR DEPLACEMENT DE FREQUENCE A CONTINUITE DE PHASE (CPFSK) FAISANT APPEL A UNE APPROXIMATION LINEAIRE DU SIGNAL CPFSK

(84) Benannte Vertragsstaaten:
**AT BE CH CY DE DK ES FI FR GB GR IE IT LI LU MC NL PT SE TR**

(30) Priorität: **21.06.2000 DE 10030390**

(43) Veröffentlichungstag der Anmeldung:
**19.03.2003 Patentblatt 2003/12**

(73) Patentinhaber: **Infineon Technologies AG**
**81669 München (DE)**

(72) Erfinder:
- **HAMMES, Markus**
  **46539 Dinslaken (DE)**
- **NEUBAUER, André**
  **47807 Krefeld (DE)**
- **MADDEN, Michael**
  **Mountain View, CA 94041 (US)**

- **SPETH, Michael**
  **40239 Düsseldorf (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**WO-A-99/56399          FR-A- 2 543 382**
**US-A- 4 603 393**

- **COLAVOLPE G ET AL: "Noncoherent sequence detection of CPM" ELECTRONICS LETTERS, IEE STEVENAGE, GB, Bd. 34, Nr. 3, 5. Februar 1998 (1998-02-05), Seiten 259-261, XP006009272 ISSN: 0013-5194**

**Beschreibung**

Die Erfindung betrifft ein Verfahren und eine Einrichtung zum kohärenten Demodulieren eines Frequenz-moduliertes Signals mit stetiger Phase.

Es sind eine Vielzahl von digitalen Modulationsarten bekannt, denen amplitudenumtastende (ASK: Amplitude Shift Keying), frequenzumtastende (FSK: Frequency Shift Keying), oder phasenumtastende (PSK: Phase Shift Keying) Verfahren sowie Mischformen derselben zugrunde liegen. Bei digitalen Kommunikationssystemen werden aus Gründen der Frequenzökonomie häufig sogenannte CPM-Modulationsarten (CPM: Continuous Phase Modulation) mit stetiger Phase verwendet. FSK mit stetiger Phase wird als CPFSK (Continuous Phase FSK) bezeichnet. Ein Beispiel hierfür ist das Gaußsche-Minimum-Shift-Keying (GMSK), welches im paneuropäischen Mobilfunkstandard GSM (Global System for Mobile Communications) zum Einsatz kommt.

Zur Demodulation eines CPFSK-Signals können kohärente oder inkohärente Verfahren eingesetzt werden. Eine inkohärente Demodulation kann entweder mittels eines analogen FM-Demodulators oder digital durch einen differentiellen Demodulator durchgeführt werden. Nachteilig ist, daß bei der inkohärenten Demodulation relativ hohe Verluste im Bereich von 3 dB auftreten. Ferner ergeben sich Leistungseinbußen, da die Inter-Symbol-Interferenz (ISI) nicht berücksichtigt werden kann.

Die primär nichtlineare CPFSK-Modulation kann näherungsweise als lineare Modulation beschrieben werden. Die dieser Eigenschaft zugrundeliegende lineare Näherung ist in dem Artikel "Exact and Approximate Construction of Digital Phase Modulations by Superposition of Amplitude Modulated Pulses (AMP)" von Pierre A. Laurent, IEEE Trans. Commun., Bd. COM-34 (1986), Seiten 150-160, angegeben. Diese Eigenschaft von CPFSK-modulierten Signalen eröffnet die Möglichkeit der kohärenten Demodulation.

In dem den nächstliegenden Stand der Technik repräsentierenden Buch "Nachrichtenübertragung" von K. D. Kammeyer, B. G. Teubner Verlag, Stuttgart 1996, Kapitel 12.1.5, Seiten 422 und 423, ist ein kohärenter Demodulator für CPFSK-Signale mit einem Modulationsindex $\eta$ beschrieben, der gleich 0,5 oder einem Vielfachen von 0,5 ist. Die Inphasal- und Quadraturzweige des Empfangssignals werden alternierend (wegen des 90° Phasenversatzes zwischen diesen Zweigen) abgetastet, und die erhaltenen Abtastwerte werden mit den entsprechenden komplexwertigen Darstellungen der der linearen Näherung zugrundeliegenden CPFSK-Ersatzsymbole der senderseitig verwendeten Eingabedatensymbole verglichen. Als tatsächlich gesendetes Eingabedatensymbol wird dasjenige der möglichen Eingabedatensymbole bestimmt, dessen komplexwertiges Ersatzsymbol den beiden gemessenen Abtastwerten (Real- und Imaginärteil) am nächsten kommt.

Dieses kohärente Demodulationsverfahren für CPFSK-Signale läßt sich auf rationale Modulationsindizes $\eta$ = M/N (wobei M und N ganzzahlig sind) verallgemeinern. Bei rationalen Modulationsindizes existiert stets eine endliche Anzahl von Zuständen der Ersatzsymbole, so daß die Demodulation - weiterhin - allein durch einen Vergleich der Abtastwerte mit dem endlichen Modulationsalphabet der Ersatzsymbole erfolgen kann.

Für nicht rationale Modulationsindizes $\eta$ gibt es kein endliches Modulationsalphabet der Ersatzsymbole mehr. Dies hat zur Folge, daß das herkömmliche Verfahren zur kohärenten CPFSK-Demodulation in diesen Fällen nicht mehr einsetzbar ist.

Der Erfindung liegt die Aufgabe zugrunde, ein Verfahren sowie eine Einrichtung zur Demodulation von CPFSK-Empfangssignalen zu schaffen, das bzw. die einen guten Empfang ermöglicht und insbesondere auch für den Fall nicht rationaler Modulationsindizes eine Demodulation des CPFSK-Empfangssignals ermöglicht.

Zur Lösung der Aufgabenstellung sind die Merkmale der unabhängigen Ansprüche vorgesehen.

Erfindungsgemäß liegt der Demodulation (d.h. der Bestimmung des der CPFSK-Modulation zugrundeliegenden n-ten Eingabedatensymbols) eine Schätzung des n-1-ten bei der linearen Näherung der CPFSK auftretenden Ersatzsymbols zugrunde. Die Demodulation erfolgt somit stets auf der Basis von im Empfänger geschätzten Ersatzsymbolen. Das heißt, ein festes, im Empfänger vorbekanntes Modulationsalphabet wird nicht benötigt, stattdessen "verfolgt" der Empfänger den Zustand des Senders durch Schätzung.

Bei einer Demodulation ohne Kanalentzerrung kann die Ermittlung des n-ten Eingabedatensymbols $d_n$ in einfacher Weise anhand der Phasenlage eines aktuell erhaltenen n-ten komplexwertigen Abtastsymbols $y_n$ relativ zu der Phasenlage des zum n-1-ten Zeitschritt geschätzten Ersatzsymbols $\hat{a}_{n-1}$ durchgeführt werden.

In alternativer Weise kann zur Ermittlung des n-ten Eingabedatensymbols $d_n$ ein Entzerrer, insbesondere Viterbi-Entzerrer, eingesetzt werden. In diesem Fall kennzeichnet sich eine vorteilhafte Verfahrensmaßnahme dadurch, daß der Entzerrung ein Trellis-Zustandsdiagramm zugrunde gelegt wird, in welchem der i-te Kanalzustand zum Zeitschritt n durch ein L-Tupel $Z_n^i = (z_n^{L-1,(i)}, .., z_n^{1,(i)}, z_n^{0,(i)})$ beschrieben wird, wobei die Variablen $z_n^{L-1,(i)}, .., z_n^{1,(i)}, z_n^{0,(i)}$ jeweils die möglichen Werte der Eingabedatensymbole $d_n$ annehmen können (L bezeichnet das Kanalgedächtnis).

Die Erfindung wird nachfolgend anhand eines Ausführungsbeispiels und einer Variante desselben unter Bezugnahme auf die Zeichnung beschrieben; in dieser zeigt:

Fig. 1    ein Blockschaltbild zur Erläuterung der prinzipiellen Struktur eines digitalen Übertragungssystems;

Fig. 2    ein Blockschaltbild zur Erläuterung der Funktionsweise eines binären CPFSK-Modulators nach dem Stand der Technik;

Fig. 3a    ein Blockschaltbild zur Erläuterung des Aufbaus eines kohärenten CPFSK-Demodulators nach dem Stand der Technik;

Fig. 3b    ein Blockschaltbild zur Erläuterung des Aufbaus eines kohärenten CPFSK-Demodulators gemäß einem Ausführungsbeispiel der Erfindung;

Fig. 4a    eine Zeiger- oder Signalraum-Darstellung der möglichen Ersatzsymbole bei CPFSK mit einem Modulationsindex $\eta = 0{,}5$;

Fig. 4b    eine Zeiger- oder Signalraum-Darstellung der möglichen Ersatzsymbole bei CPFSK mit einem irrationalen Modulationsindex $\eta$;

Fig. 5    ein Blockschaltbild eines adaptiven Entzerrers gemäß einer Variante des in Fig. 3b gezeigten Ausführungsbeispiels; und

Fig. 6    ein Ausschnitt aus einem Trellis-Diagramm zur Erläuterung der Viterbi-Entzerrung.

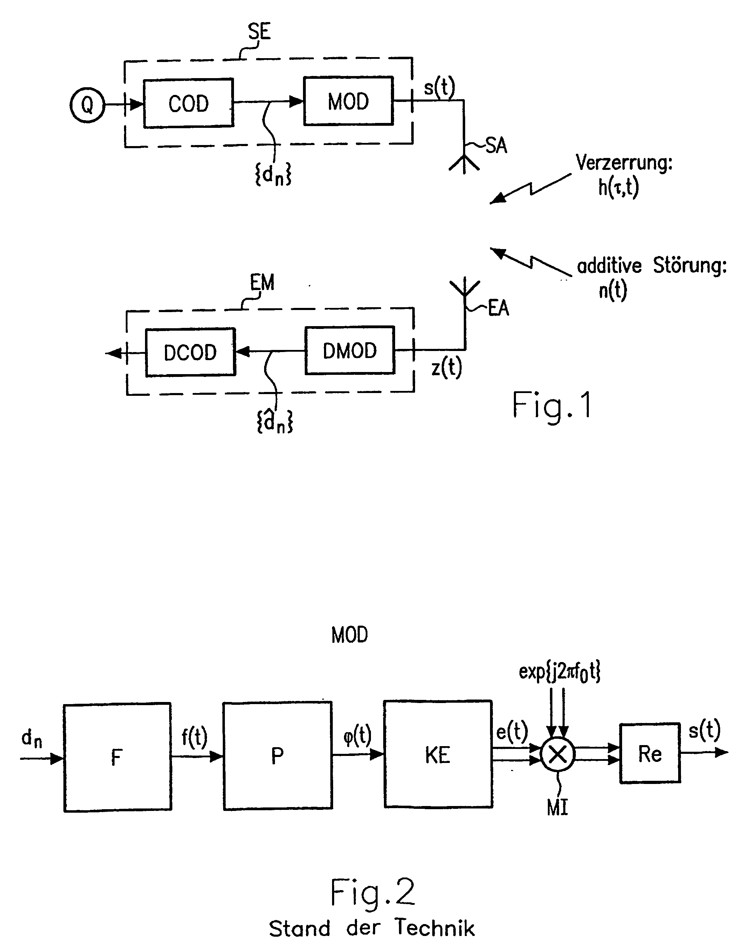

Fig. 1 zeigt den bekannten prinzipiellen Aufbau eines digitalen Übertragungssystems, wie es beispielsweise im Mobilfunk eingesetzt wird.

Eine Sendeeinrichtung SE nimmt ein (beispielsweise durch ein Mikrophon erzeugtes) analoges Quellensignal Q entgegen und führt dieses einem Codierer COD zu. Der Codierer COD umfaßt in nicht dargestellter Weise einen Analog-Digital-Umsetzer zur Digitalisierung des Quellensignals Q und kann ferner einen Quellencodierer, einen Kanalcodierer, einen Verschachteler und einen Blockbildner enthalten, die das digitalisierte Quellensignal Q in geeigneter Weise komprimieren, fehlerschutzcodieren, verschachteln und in Datenblöcke unterteilen.

Der Codierer COD gibt ein digitales Datensignal aus, das aus einer Symbolfolge $\{d_n\}$ der Datensymbole $d_0$, $d_1$, ... besteht, denen beispielsweise der Wertevorrat $\{-1, 1\}$ zugrunde liegt. Die Symbolfolge $\{d_n\}$ wird einer Modulatoreinrichtung MOD zugeführt, die in Abhängigkeit von der Symbolfolge $\{d_n\}$ einen hochfrequenten Träger moduliert. Das dabei erzeugte modulierte, zeitabhängige, reelle Sendesignal s(t) wird in einen Übertragungskanal eingespeist, d.h. beispielsweise über eine Sendeantenne SA als Funksignal abgestrahlt.

Die Datensymbole $d_0$, $d_1$, ... werden im folgenden als Eingabedatensymbole (für die Modulatoreinrichtung) bezeichnet.

Bei der Übertragung des Sendesignals s(t) über den Übertragungskanal können Signalverzerrungen und Signalstörungen auftreten, die beide von der Art des Übertragungskanals abhängig sind.

Der verzerrende Einfluß des Übertragungskanals wird durch eine Kanalimpulsantwort $h(\tau,t)$ beschrieben. Der dem verzerrten Signal überlagerte additive Störungsanteil wird durch eine Funktion n(t) beschrieben. Ein an einem Empfänger EM empfangenes zeitkontinuierliches Empfangssignal z(t) ergibt sich demnach zu

$$z(t) \;=\; \int_{0}^{\infty} h(\tau,\,t) \cdot s(t-\tau)\,d\tau \;+\; n(t) \tag{1}$$

Der Empfänger EM empfängt das am Ausgang des Übertragungskanals vorliegende (ggf. verzerrte und gestörte) reelle Empfangssignal z(t) z.B. über eine Empfangsantenne EA. Das Empfangssignal z (t) wird einem Demodulator DMOD zugeführt. Dieser demoduliert das Empfangssignal z(t). Am Ausgang des Demodulators DMOD steht eine Symbolfolge $\{\hat{d}_n\}$ bereit, deren Elemente $\hat{d}_n$ Schätzwerte der zugehörigen Eingabedatensymbole $d_n$ sind.

Zur Erläuterung der CPFSK-Modulation zeigt Fig. 2 in Form eines Blockschaltbildes die Struktur einer herkömmlichen CPFSK-Modulatoreinrichtung MOD. Dabei sind in Fig. 2 reellwertige Größen durch einen einfachen Pfeil und komplexwertige Größen durch einen Doppelpfeil kenntlich gemacht.

Der CPFSK-Modulator MOD weist im Signalweg ein Filter F, einen Phasenakkumulator P, eine Einrichtung KE zur Erzeugung einer komplexen Einhüllenden e(t), eine Mischstufe MI und eine Einrichtung Re zur Bildung des Realteils eines einlaufenden Signals auf. Am Ausgang der letztgenannten Einrichtung Re steht das (reelle) modulierte Signal s(t) zur Verfügung.

Das Filter F weise die reelle Impulsantwort g(t) auf. Die Impulsantwort g(t) wird im folgenden als Basisbandimpuls bezeichnet. Die Impulsform und die (zeitliche) Länge des Basisbandimpulses g(t) definieren die CPFSK-Modulationsart.

Bekanntlich können verschiedene Impulsformen, beispielsweise Rechteckimpulse, $\cos^2$-Impulse oder auch Gauß-Impulse, eingesetzt werden.

Die Impulslänge TK des Basisbandimpulses g(t) (d.h. die Zeitdauer, über die der Basisbandimpuls g (t) einen von Null verschiedenen Wert aufweist) kann sich über K = 1, 2, 3, .. Symbolzeitdauern T erstrecken. Bei K = 1 wird von Full-Response-Modulationsarten gesprochen. Erstreckt sich der Basisbandimpuls g(t) über mehrere Symbolzeitdauern (d.h. K = 2, 3, ...), werden sogenannte Partial-Response-Modulationsarten generiert.

Das am Ausgang des Filters F auftretende reelle Pulsampliuden-modulierte Frequenzsignal f (t) ist für t > 0 eine lineare Überlagerung zeitverschobener und mit den Symbolen $d_n$ der Eingabedatensymbolfolge $\{d_n\}$ gewichteter Versionen von g(t):

$$f(t) = \sum_{n} d_n g(t - nT) \tag{2}$$

Im Phasenakkumulator P wird das Pulsampliuden-modulierte Frequenzsignal f(t) zur Bildung des Phasen-signals $\varphi(t)$ integriert. In der Einrichtung KE zur Erzeugung der komplexen Einhüllenden e(t) wird diese gemäß der Gleichung

$$e(t) = \exp\{j(\varphi(t) + \varphi 0)\}$$

aus dem Phasensignal $\varphi(t)$ berechnet. Dabei bezeichnet j die imaginäre Einheit und $\varphi_0$ eine Integrationskonstante. Folglich ergibt sich die komplexe Einhüllende e(t) nach:

$$e(t) = \exp\left\{j\left(2\pi\Delta F \int_{-\infty}^{t} f(\tau)d\tau\right)\right\} \tag{4}$$

Dabei bezeichnet $\Delta F$ den bei der Modulation eingesetzten Frequenzhub. Der Modulationsindex $\eta$ ist in übli-cher Weise durch $\eta = 2\Delta FT$ definiert.

Die komplexe Einhüllende e(t) wird dann in der Mischstufe MI mit dem hochfrequenten Träger der Frequenz $f_0$ multipliziert. Der Realteil (Re) des heraufgemischten Signals ist das modulierte Sendesignal s(t).

Die primär nichtlineare CPFSK-Modulation läßt sich gemäß dem bereits erwähnten Artikel von P. A. Laurent näherungsweise als eine lineare Modulation unter Verwendung von Ersatzsymbolen $a_n$ anstelle der Eingabedaten-symbole $d_n$ darstellen:

$$e(t) \approx \sum_{n} a_n \cdot C_0(t - nT) \tag{5}$$

Zwischen dem sogenannten Elementarimpuls $C_0(t)$ und dem Basisbandimpuls g(t) besteht eine bekannte, funktionale Beziehung, die es ermöglicht, bei vorgegebener CPFSK-Modulationsart (d.h. bei vorgegebenem Basisbandimpuls g(t)) den zugehörigen Elementarimpuls $C_0(t)$ zu bestimmen. In diesem Zusammenhang wird auf den bereits erwähnten Artikel von P. A. Laurent verwiesen.

Zwischen den Ersatzsymbolen an und den Eingabedatensymbolen $d_n$ besteht die folgende Beziehung:

$$a_n = \exp\left\{j\pi\eta \sum_{i=-\infty}^{n} d_i\right\} \tag{6}$$

Jedes Ersatzsymbol ergibt sich demzufolge aus den akkumulierten Eingabedatensymbolen.

Gleichung (6) zeigt, daß nur für den Fall eines rationalen Modulationsindex $\eta$ eine endliche Anzahl von Ersatzsymbolen existiert. Aus Gleichung (6) folgt ferner die Beziehung:

$$a_n = a_{n-1} \, \exp\{j\pi\eta d_n\}$$

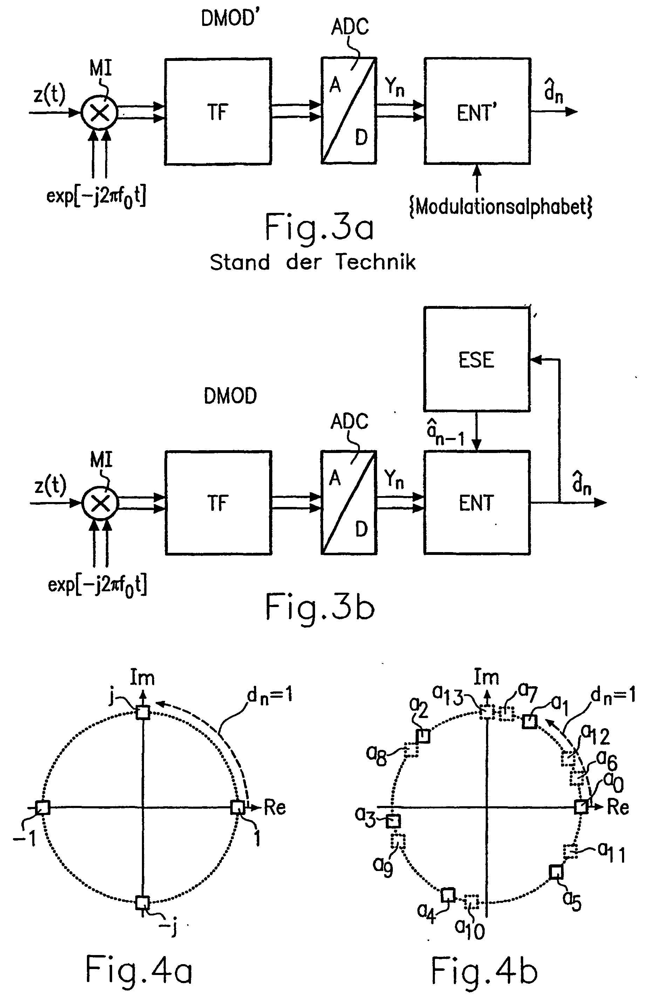

Fig. 4a zeigt eine Zeiger- oder Signalraum-Darstellung der möglichen Ersatzsymbole $a_n$ bei CPFSK mit einem Modulationsindex $\eta = 0,5$. Auf der x-Achse ist der Realteil und auf der y-Achse der Imaginärteil aufgetragen. Es wird deutlich, daß bei $\eta = 0,5$ vier Zustände existieren, d.h. die Ersatzsymbole $a_n$ (bei einer Anfangsphase von 0) für $d_n = 1$ oder -1 lediglich die vier Werte 1, j, -1, -j annehmen können. Diese vier Werte von $a_n$ werden als Modulationsalphabet bezeichnet.

Es sei beispielsweise $a_{n-1} = 1$. Durch ein Eingabedatensymbol $d_n = 1$ wird der durch den gestrichelt gezeichneten Pfeil dargestellte Zustandsübergang zu $a_n = j$ erzeugt.

Im folgenden wird die bekannte Demodulation eines CPFSK-Signals für den Fall eines gedächtnisfreien Übertragungskanals ohne additives Rauschen erläutert. Der Demodulator soll aus dem Empfangssignal z(t) die Eingabedatensymbolfolge $\{d_n\}$ bestimmen. Ein hierfür geeigneter Demodulator DMOD' nach dem Stand der Technik ist in Fig. 3a gezeigt. Komplexwertige Größen sind wiederum durch einen Doppelpfeil dargestellt.

Der Demodulator DMOD' kann eine Mischstufe MI umfassen, die mit der Frequenz $f_0$ betrieben wird, und die zum Heruntermischen des Empfangssignals z(t) in das Basisband dient. Möglich ist aber auch eine Bearbeitung des Empfangssignals z(t) im Bandpaßbereich mit einer geeignet gewählten Zwischenfrequenz.

Zur Bandbreitenbegrenzung wird ein Tiefpaßfilter TF verwendet. Nach der Filterung erfolgt eine Abtastung des heruntergemischten, gefilterten Empfangssignals z(t) mittels eines Analog-Digital-Umsetzers ADC. Die Abtastung erfolgt mindestens im Symboltakt 1/T.

Am Ausgang des ADC steht eine Folge $\{y_n\}$ bestehend aus komplexwertigen Abtastwerten $y_n$ bereit.

Die Folge $\{y_n\}$ von komplexwertigen Abtastwerten wird einem Entscheider ENT' zugeführt. Der Entscheider ENT' ermittelt aus den komplexwertigen Abtastwerten $y_n$ und dem dem Entscheider ENT' bekannten, endlichen Modulationsalphabet die geschätzte Eingabedatensymbolfolge $\{d_n\}$.

Wird für das Tiefpaßfilter TF die zu dem Elementarimpuls $C_0(t)$ gehörige Matched-Filter Impulsantwort vorgesehen, so erfolgt die Demodulierung der komplexwertigen Abtastwerte $y_n$ durch einen einfachen Vergleich der Abtastwerte $y_n$ mit dem Modulationsalphabet. In dem anhand von Fig. 4a erläuterten Fall eines 4-elementigen Modulationsalphabets muß lediglich das Vorzeichen des Real- und des Imaginärteils von $y_n$ ermittelt werden. Aus der dabei erhaltenen empfängerseitigen Bestimmung von $a_n$, die mit $\hat{a}_n$ bezeichnet wird, und aus der im vorhergehenden Zeitschritt ermittelten Bestimmung von $a_{n-1}$, bezeichnet mit $\hat{a}_{n-1}$, ergibt sich entsprechend der in Gleichung (7) angegebenen Beziehung direkt die Schätzung für das Eingabedatensymbol $d_n$, d.h. $\hat{d}_n$.

Fig. 3b zeigt in Form eines Blockschaltbildes ein Ausführungsbeispiel eines erfindungsgemäßen Demodulators DMOD. Vergleichbare Teile sind mit denselben Bezugszeichen wie in Fig. 3a bezeichnet.

Auch hier umfaßt der Demodulator DMOD einen Entscheider ENT, dem die Folge $\{y_n\}$ von komplexwertigen Abtastwerten zugeführt wird. Ferner ist eine Ersatzsymbol-Schätzeinrichtung ESE vorgesehen, welche dem Entscheider ENT zur Bestimmung des n-ten Eingabedatensymbols $d_n$ eine Schätzung $\hat{a}_{n-1}$ des n-1-ten Ersatzsymbols $a_{n-1}$ zur Verfügung stellt.

Die Realisierungsform des erfindungsgemäßen Entscheiders ENT richtet sich nach der Art des betrachteten Übertragungskanals. Zunächst wird ein verzerrungs- und störungsarmer Übertragungskanal betrachtet, bei dem eine Demodulation ohne Entzerrung durchführbar ist.

Der Ermittlung von $d_n$ wird im Entscheider ENT folgende Relation zugrunde gelegt:

$$\hat{d}_n = \begin{cases} 1 & \arg(y_n) > \arg(\hat{a}_{n-1}) \\ -1 & \arg(y_n) < \arg(\hat{a}_{n-1}) \end{cases} \tag{8}$$

Dabei bezeichnet arg($\cdot$) das Argument der im Klammerausdruck angegebenen komplexen Zahl, ausgedrückt im Bogenmaß. Bei der erfindungsgemäßen Bestimmung von $d_n$ wird die Entscheidung anhand der Phasenlage des aktuellen Abtastsymbols $y_n$ relativ zu der Phasenlage des zum vorhergehenden Zeitschritt geschätzten Ersatzsymbols $\hat{a}_{n-1}$ getroffen.

Die getroffene Entscheidung bezüglich $\hat{d}_n$ wird in einem nächsten Schritt dazu verwendet, den Zustand des Ersatzsymbols $a_n$ zu schätzen. Im einfachsten Fall erfolgt dies nach der Beziehung

$$\hat{a}_n = \hat{a}_{n-1} \exp\{j\pi\eta \overset{\wedge}{d}_n\}$$

Dieses geschätzte Ersatzsymbol $\hat{a}_n$ dient dann als Basis für die Entscheidung des Eingabedatensymbols $d_{n+1}$ für den nächsten Zeitschritt gemäß Gleichung (8).

Mit dem erfindungsgemäßen Verfahren ist eine kohärente Demodulation von CPFSK-modulierten Signalen für beliebige Modulationsindizes möglich. Dieser Sachverhalt wird anhand von Fig. 4b erläutert.

Fig. 4b zeigt eine der Fig. 4a vergleichbare Zeiger- oder Signalraum-Darstellung der Ersatzsymbole bei CPFSK, jedoch unter Zugrundelegung eines irrationalen Modulationsindex $\eta$. Aufgrund des irrationalen Modulationsindex $\eta$ existieren unendlich viele Werte (Zustände) für $a_n$, d.h. es liegt ein Modulationsalphabet unendlicher großer Mächtigkeit vor. Die ersten 13 Ersatzsymbole $a_1$, $a_2$,..., $a_{13}$, die durch Zustandsübergänge bewirkt werden, die durch $d_n = 1$ erzeugt werden, sind in Fig. 4b dargestellt.

Da anders als beim konventionellen Vorgehen die Demodulation nicht auf der Basis eines Vergleichs des Abtastsymbols mit einem vorgegebenen Modulationsalphabet, sondern anhand der Ermittlung der relativen Phasenlage zwischen dem Abtastsymbol und einem zuvor geschätzten (nicht vorgegebenen) Modulationszustand erfolgt, ist stets eine Entscheidung hinsichtlich der Fallunterscheidung in Gleichung (8) - d.h. eine Demodulation des CPFSK-Signals - möglich.

Aufgrund der Verwendung des geschätzten Modulationszustands $\hat{a}_{n-1}$ zur Demodulierung des CPFSK-Signals im Zeitschritt n kann das erfindungsgemäße Verfahren in anschaulicher Weise als "Senderzustands-Nachlaufverfahren" ("Transmitter State Tracking") bezeichnet werden.

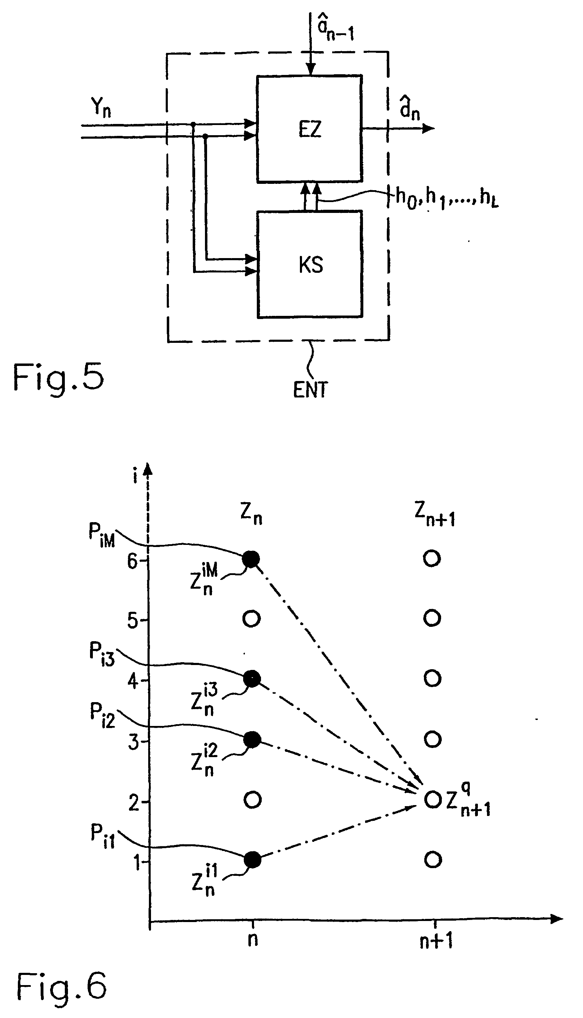

Der Entscheider ENT kann bei Zugrundelegung eines zeitvarianten, verzerrenden und störungsbehafteten Übertragungskanals (z.B. eines Mobilfunkkanals) auch als adaptiver Entzerrer ausgebildet sein. Ein entsprechender Aufbau des Entscheiders ENT ist in Fig. 5 dargestellt.

In diesem Fall umfaßt der Entscheider ENT einen Kanalschätzer KS und einen Entzerrer EZ. Sowohl dem Entzerrer EZ als auch dem Kanalschätzer KS werden die komplexwertigen Abtastsymbole $y_n$ zugeführt.

Grundsätzlich kann ein beliebiger Entzerrer EZ eingesetzt werden. Im folgenden wird das erfindungsgemäße Prinzip am Beispiel eines Viterbi-Entzerrers erläutert.

Das Kanalgedächtnis des der Viterbi-Entzerrung zugrundeliegenden äquivalenten, zeitdiskreten Modellkanals wird wie bereits erwähnt mit L bezeichnet. Der Kanalschätzer KS ermittelt in ständiger Wiederholung eine Anzahl von L+1 geschätzten Kanalimpulsantworten $h_1$, 1 = 0, 1, .., L. Aus der Folge der Abtastwerte $\{y_n\}$, aus den L+1 geschätzten Kanalimpulsantworten $h_1$ und aus den von der Ersatzsymbol-Schätzeinrichtung ESE gelieferten Schätzwerten bestimmt der Viterbi-Entzerrer EZ die Datensymbolfolge $\{d_n\}$.

Die Abtastwerte $y_n$ lassen sich nach

$$y_n = \sum_{l=0}^{L} a_{n-l} h_l + n_n \qquad (10)$$

als zeitdiskrete Faltungen der gesendeten Ersatzsymbolfolge $\{a_n\}$ mit den L+1 Kanalimpulsantworten $h_0$, $h_1$, .., $h_L$, zuzüglich einer die additive Störung $n(t)$ repräsentierenden Störsymbolfolge $\{n_n\}$, bestehend aus Störsymbolen $n_n$, ausdrucken.

Zunächst wird die herkömmliche Arbeitsweise eines Viterbi-Entzerrers bei der CPFSK-Demodulierung kurz zusammengefaßt:

Viterbi-Entzerrer sind MLSE-(Maximum-Likelihood Sequence Estimation-) Folgenschätzer. Es wird eine zu schätzende Ersatzsymbolfolgen $\{a_n\}$ bestehend aus p+1 Elementen (p ist eine ganze positive Zahl) betrachtet. Als mutmaßlich gesendete Folge wird gemäß der MLSE diejenige $\{\hat{a}_n\}$ der möglichen p+1-elementigen Ersatzsymbolfolgen $\{a_n\}$ bestimmt, deren Symbole, gewichtet mit den geschätzten Kanalimpulsantworten $h_0$, $h_1$, .., $h_L$, den geringsten Euklidschen Abstand zu der Folge der gemessenen Abtastwerte $y_n$ hat. Die Bedingung für die gesuchte p+1-elementige Ersatzsymbolfolge $\{\hat{a}_n\}$ lautet:

$$\sum_{n=0}^{L+p} \left(y_n - \sum_{l=0}^{L} a_{n-l}\hat{h}_l\right)^2 = \text{Minimum für } \{\hat{a}_n\} = \{a_n\} \qquad (11)$$

Beim Viterbi-Algorithmus (VA) wird die Bedingungsgleichung (11) rekursiv gelöst.

Hierzu wird der zeitdiskrete Modellkanal als endlicher, getakteter Automat beschrieben. Der (im Empfänger unbekannte) Zustand $A_n$ des Kanals zum Zeitschritt n ist bei der herkömmlichen VA-Demodulierung eines CPFSK-Signals eindeutig durch die Angabe der senderseitig zuletzt eingegebenen L Ersatzsymbole $a_{n-L}$, .., $a_{n-2}$, $a_{n-1}$ und einer akkumulierten Phase

$$\phi_{n-L-1} \;=\; \pi\eta \sum_{l=-\infty}^{n-L-1} d_l \, ,$$

d.h. durch das L+1-Tupel $A_n = (\phi_{n-L-1}; a_{n-L}, .., a_{n-2}, a_{n-1})$ beschrieben.

Dieser tatsächliche Kanalzustand $A_n$ ist im Empfänger natürlich unbekannt.

Allgemein kann ein Kanalzustand durch ein L+1-Tupel $Z_n = (\phi_{n-L-1}; z_n^{L-1}, .., z_n^1, z_n^0)$ angegeben werden. Jede der Variablen $z_n^{L-1}$, .., $z_n^1$, $z_n^0$ kann die Werte des Modulationsalphabets (d.h. im Stand der Technik der Ersatzsymbole) annehmen.

Die gesendete Folge $\{a_n\}$ bestimmt einen Pfad durch die in einem Graphen über den Zeitschritten n aufgetragenen möglichen Kanalzustände $Z_n$. Dieser Graph heißt Trellis-Diagramm (oder einfach "Trellis"). Der VA ermittelt zur Schätzung der gesendeten Folge $\{a_n\}$ die Folge $\{A_n\}$ der Zustände durch das Trellis-Diagramm. Der durch die Folge $\{A_n\}$ bestimmte Pfad durch das Trellis-Diagramm wird auch als "kürzester" Pfad durch das Trellis-Diagramm bezeichnet.

Fig. 6 zeigt am Beispiel eines M-stufigen Datensignals und eines rationalen Modulationsindex (für die Darstellung wurde entsprechend Fig. 4a M = 4 gewählt) einen Ausschnitt des Trellis-Diagramms für die beiden Zeitschritte n und n+1. Jeder Kreis repräsentiert einen möglichen Kanalzustand. Die möglichen Kanalzustände zum Zeitschritt n werden mit $Z_n^1$, $Z_n^2$, .., allgemein $Z_n^i$, bezeichnet. Eine entsprechende Notation wird für die möglichen Kanalzustände zum Zeitschritt n+1 verwendet.

Jeder Zustand zum Zeitschnitt n+1 kann durch M Übergänge ausgehend von M unterschiedlichen Vorgänger-Zuständen zum Zeitschritt n erreicht werden. Betrachtet werden nun diejenigen M möglichen Vorgänger-Zustände zum Zeitschritt n, die zu einem bestimmten, mit dem Index q gekennzeichneten Zustand $Z_{n+1}^q$ zum Zeitschritt n+1 führen. Für jeden dieser M möglichen Vorgänger-Zustände $Z_n^{i1}$, $Z_n^{i2}$, .., $Z_n^{iM}$ zum Zeitschritt n, die in Fig. 6 fett dargestellt sind (d.h. in Fig. 6 ist i1=1, i2=3, i3=4 und iM=i4=6), wurde bei der vorherigen Rekursion bereits der kürzeste, auf diesen Zustand führende Pfad $P_{i1}$, $P_{i2}$, $P_{i3}$ bzw. $P_{iM}$ ermittelt. Die Frage ist, welcher dieser M Pfade, die zu den möglichen Vorgänger-Zuständen $Z_n^{i1}$, $Z_n^{i2}$, .., $Z_n^{iM}$ hinführen, derjenige ist, welcher, wenn er zu dem betrachteten Zustand $Z_{n+1}^q$ im Zeitschritt n+1 fortgesetzt wird, den kürzesten Pfad zu diesem Zustand $Z_{n+1}^q$ aufbaut.

Zur Beantwortung dieser Frage wird beim VA für jeden der betrachteten Übergänge (zwischen einem der möglichen Vorgänger-Zustände $Z_n^{i1}$, $Z_n^{i2}$, .., $Z_n^{iM}$ und dem betrachteten Ziel-Zustand $Z_{n+1}^q$) ein Metrikinkrement $I(Z_n^{i1}, y_n)$, $I(Z_n^{i2}, y_n)$, .., $I(Z_n^{iM}, y_n)$ berechnet, und zwar gemäß:

$$I(Z_n^i, y_n) \;=\; \left( y_n \;-\; \sum_{l=1}^{L} z_n^{l-1,(i)} \hat{h}_l \;-\; a_n \hat{h}_0 \right)^2 \tag{12}$$

i = i1, i2, .., 1M,

wobei nach der bereits eingeführten Notation die M Vorgänger-Zustände jeweils durch ein L+1-Tupel $Z_n^i = (\phi_{n-L-1}^{(i)}; z_n^{L-1,(i)}, .., z_n^{1,(i)}, z_n^{0,(i)})$, i = i1, i2, .., iM, beschrieben werden.

Aufgrund der rekursiven Berechnungsweise ist zum Zeitschritt n für jeden der M möglichen Vorgänger-Zustände $Z_n^{i1}$, $Z_n^{i2}$, .., $Z_n^{iM}$ bereits eine minimale Metrik $Me(Z_n^{i1})$, $Me(Z_n^{i2})$, .., $Me(Z_n^{iM})$ berechnet worden. Auf der Basis dieser bekannten M minimalen Metriken $Me(Z_n^{i1})$, $Me(Z_n^{i2})$, .., $Me(Z_n^{iM})$ für die möglichen Vorgänger-Zustände und der berechneten M Metrikinkremente $I(Z_n^i, y_n)$ für die jeweiligen Übergänge wird der Pfad-Entscheidungsprozeß für den Zeitschritt n durchgeführt. Er umfaßt drei Schritte:

- Durch einen Additionsschritt ("ADD") werden die mit $me^i(Z_{n+1}^q)$ bezeichneten M Kandidaten für die minimale Metrik des betrachteten Ziel-Zustands $Z_{n+1}^q$ als Summe jeweils der minimalen Metrik einer der Vorgänger-Zustände und des zugehörigen Metrikinkrements nach

$$me^i (Z^q_{n+1}) = Me(Z^i_n) + I(Z^i_n, y_n), \quad i = i1, i2, .., iM$$

berechnet.

- Durch einen Vergleichsschritt ("COMPARE") wird diejenige der M berechneten Metriken $me^i(Z^q_{n+1})$ bestimmt, die den kleinsten Wert aufweist. Diese wird die minimale Metrik $Me(Z^q_{n+1})$ des betrachteten Zustands.

- Durch einen Auswahlschritt ("SELECT") wird derjenige Vorgänger-Zustand der M möglichen Vorgänger-Zustände $Z^{i1}_n$, $Z^{i2}_n$, .., $Z^{iM}_n$ ausgewählt, der Ausgangspunkt des Übergangs zum Zustand $Z^q_{n+1}$ mit der minimaler Metrik $Me(Z^q_{n+1})$ ist, d.h. es wird der Index i ermittelt, für den $me^i(Z^q_{n+1}) = Me(Z^q_{n+1})$ gilt. Damit ist der richtige Vorgänger-Zustand bestimmt. Die Pfade, die zu den übrigen Voränger-Zuständen führen, brauchen nun nicht mehr weiter verfolgt zu werden.

Diese drei Schritte sind als ACS-(Add-Compare-Select-)Operationen bekannt. Das geschätzte Eingabedatensymbol $d_n$ wird dann mit Hilfe der akkumulierten Phase bezüglich des gefundenen Pfads berechnet.

Diese bekannte Anwendung des VA bei der Demodulierung eines CPFSK-Signals wird bei der Erfindung modifiziert. Denn für einen nicht rationalen Modulationsindex würden sich unendlich viele Zustände ergeben, weshalb der Trellis nicht realisierbar bzw. implementierbar wäre.

Da erfindungsgemäß zum Zeitschritt n nicht das gesendete Ersatzsymbol $a_n$ sondern direkt das Eingabedatensymbol $d_n$ geschätzt wird, wird es möglich, einen Trellis aufzustellen, bei dem einerseits nicht mehr die akkumulierte Phase in den Zuständen enthalten ist und bei dem andererseits auch für einen nicht rationalen Modulationsindex $\eta$ nur endlich viele Zustände auftreten. Die Zustände werden so zugewiesen, daß nur die letzten L Eingabedatensymbole entsprechend der vorhandenen ISI berücksichtigt werden. Mithin wird der i-te Zustand des Trellis zum Zeitschritt n allgemein durch das L-Tupel $Z^i_n = (Z^{L-1,(i)}_n, .., Z^{1,(i)}_n, Z^{0,(i)}_n)$ beschrieben, wobei die Variablen $Z^{L-1,(i)}_n, .., Z^{1,(i)}_n, Z^{0,(i)}_n$ die möglichen Werte der Eingabedatensymbole $d_n$, d.h. {1, -1}, annehmen können.

Der tatsächliche, im Empfänger unbekannte Kanalzustand zum Zeitschritt n wird dann durch das L-Tupel $D_n = (d_{n-L}, .., d_{n-2}, d_{n-1})$ beschrieben.

Im folgenden wird das Beispiel L = 2 betrachtet. Das mit $\hat{r}^{(i)}_n$ bezeichnete, ungestörte rekonstruierte Signal zum Zeitschritt n im Zustand i bestimmt sich gemäß Gleichung (11) zu

$$\hat{r}^{(i)}_n = \sum_{l=0}^{L} a^{(i)}_{n-l} \hat{h}_l \overset{L=2}{=} a^{(i)}_n \hat{h}_0 + a^{(i)}_{n-1} \hat{h}_1 + a^{(i)}_{n-2} \hat{h}_2$$
$$= a^{(i)}_{n-1} e^{j\pi\eta d_n} \hat{h}_0 + a^{(i)}_{n-1} \hat{h}_1 + a^{(i)}_{n-1} e^{j\pi\eta(-d_{n-1})} \hat{h}_2 \quad (14)$$

Das ungestörte rekonstruierte Signal wird nun gemäß Gleichung (12) zusammen mit dem (gestörten) empfangenen Signal $y_n$ zur Berechnung einer Übergangsmetrik herangezogen.

$$I(Z^i_n, y_n) = (y_n - \hat{r}^{(i)}_n)^2$$

Bei der Berechnung der Übergangsmetrik wird für $a^{(i)}_{n-1}$ der geschätzte, nachgeführte Sender-Zustand $\hat{a}^{(i)}_{n-1}$ verwendet. Die Schätzung kann wiederum gemäß Gleichung (9) anhand des im vorhergehenden Demodulationsschritt erhaltenen Demodulationsergebnisses erfolgen, d.h.

$$\hat{a}^{(i)}_{n-1} = \hat{a}^{(i)}_{n-2} \exp\{j\pi\eta \hat{d}_{n-1}\}$$

Die Durchführung der ACS-Operationen zu den betrachteten Übergängen kann dann in der bereits beschriebenen Art und Weise erfolgen.

Gleichung (14) verdeutlicht, daß beim erfindungsgemäßen VA zur Demodulation eines CPFSK-Signals mit L = 2 keine akkumulierte Phase sondern lediglich ein aus zwei Eingabedatensymbolen bestehender Zustand $d_n$, $d_{n-1}$ berücksichtigt werden muß.

Neben den beiden vorstehend erläuterten Anwendungsfällen (kohärenter Empfang ohne Entzerrung und mit VA-Entzerrung) kann das erfindungsgemäße Prinzip auch auf andere Entzerrer, z.B. Entzerrer mit quantisierter Rückführung, sog. DF-(Decision Feedback-)Entzerrer, angewendet werden.

**Patentansprüche**

1. Verfahren zum Demodulieren eines CPFSK-modulierten Signals,
   **dadurch gekennzeichnet,**

   - **daß** die Ermittlung eines der CPFSK-Modulation zugrundeliegenden n-ten Eingabedatensymbols ($d_n$) anhand einer Schätzung des n-1-ten bei der linearen Näherung der CPFSK auftretenden Ersatzsymbols ($a_{n-1}$) durchgeführt wird, wobei die Schätzung des n-1-ten Ersatzsymbols ($a_{n-1}$) in Abhängigkeit von dem zuvor ermittelten n-1-ten Eingabedatensymbol ($d_{n-1}$) erfolgt.

2. Verfahren nach Anspruch 1,
   **dadurch gekennzeichnet,**

   - **daß** die Schätzung des n-1-ten Ersatzsymbols nach der Gleichung $\hat{a}_{n-1} = \hat{a}_{n-2}\exp\{j\pi\eta\hat{d}_{n-1}\}$ erfolgt, wobei $\hat{a}_{n-1}$ bzw. $\hat{a}_{n-2}$ die Schätzergebnisse für das n-1-te bzw. n-2-te Ersatzsymbol sind, $d_{n-1}$ das ermittelte n-1-te Eingabedatensymbol ist, und $\eta$ den Modulationsindex bezeichnet.

3. Verfahren nach einem der Ansprüche 1 oder 2,
   **dadurch gekennzeichnet,**

   - **daß** die Ermittlung des n-ten Eingabedatensymbols $d_n$ anhand der Phasenlage eines aktuell erhaltenen n-ten komplexwertigen Abtastsymbols $y_n$ relativ zu der Phasenlage des zum n-1-ten Zeitschritt geschätzten Ersatzsymbols $\hat{a}_{n-1}$ durchgeführt wird.

4. Verfahren nach Anspruch 3,
   **dadurch gekennzeichnet,**

   - **daß** die Ermittlung des n-ten Eingabedatensymbols $d_n$ nach der Gleichung

$$\hat{d}_n = \begin{cases} 1 & \arg(y_n) > \arg(\hat{a}_{n-1}) \\ -1 & \arg(y_n) < \arg(\hat{a}_{n-1}) \end{cases}$$

   erfolgt, wobei $\hat{d}_n$ das ermittelte n-te Eingabedatensymbol $d_n$ bezeichnet.

5. Verfahren nach einem der vorhergehenden Ansprüche,
   **dadurch gekennzeichnet,**

   - **daß** zur Ermittlung des n-ten Eingabedatensymbols $d_n$ ein Entzerrer, insbesondere Viterbi-Entzerrer, eingesetzt wird.

6. Verfahren nach Anspruch 5,
   **dadurch gekennzeichnet,**

   - **daß** der Entzerrung ein Trellis-Zustandsdiagramm zugrunde gelegt wird, in welchem der i-te Kanalzustand zum Zeitschritt n durch ein L-Tupel $Z_n^i = (z_n^{L-1,(i)}, .., z_n^{1,(i)}, z_n^{0,(i)})$ beschrieben wird, wobei die Variablen $z_n^{L-1,(i)}, .., z_n^{1,(i)}, z_n^{0,(i)}$ jeweils die möglichen Werte der Eingabedatensymbole $d_n$ annehmen können, und L das Kanalgedächtnis bezeichnet.

7. Einrichtung zum Demodulieren eines CPFSK-modulierten Signals,

   - mit einer Eingabedatensymbol-Entscheidungseinrichtung (ENT) zur Ermittlung eines der CPFSK-Modulation zugrundeliegenden n-ten Eingabedatensymbols ($d_n$)

**dadurch gekennzeichnet,**

- **daß** die Demodulatoreinrichtung (DMOD) eine Ersatzsymbol-Schätzeinrichtung (ESE) umfaßt, die eine Schätzung des n-1-ten bei der linearen Näherung der CPFSK auftretenden Ersatzsymbols ($a_{n-1}$) in Abhängigkeit von dem zuvor ermittelten n-1-ten Eingabedatensymbol ($d_{n-1}$) durchführt, und
- **daß** die Eingabedatensymbol-Entscheidungseinrichtung (ENT) zur Ermittlung des n-ten Eingabedatensymbols ($d_n$) das geschätzte n-1-te Ersatzsymbol ($â_{n-1}$) heranzieht.

8. Einrichtung nach Anspruch 7,
   **dadurch gekennzeichnet,**

   - **daß** die Ersatzsymbol-Schätzeinrichtung (ESE) die Schätzung des n-1-ten Ersatzsymbols ($a_{n-1}$) nach der Gleichung $â_{n-1} = â_{n-2} \exp\{j\pi\eta d_{n-1}\}$ vornimmt, wobei $â_{n-1}$ bzw. $â_{n-2}$ die Schätzergebnisse für das n-1-te bzw. n-2-te Ersatzsymbol sind, $d_{n-1}$ das ermittelte n-1-te Eingabedatensymbol ist, und $\eta$ den Modulationsindex bezeichnet.

9. Einrichtung nach einem der Ansprüche 7 oder 8,
   **dadurch gekennzeichnet,**

   - **daß** die Eingabedatensymbol-Entscheidungseinrichtung (ENT) das n-te Eingabedatensymbol $d_n$ anhand der Phasenlage eines aktuell erhaltenen n-ten komplexwertigen Abtastsymbols $y_n$ relativ zu der Phasenlage des zum n-1-ten Zeitschritt geschätzten Ersatzsymbols $â_{n-1}$ ermittelt.

10. Einrichtung nach einem der Ansprüche 7 bis 9,
    **dadurch gekennzeichnet,**

    - **daß** die Eingabedatensymbol-Entscheidungseinrichtung (ENT) ein Entzerrer, insbesondere ein Viterbi-Entzerrer, ist.


**Claims**

1. Method for demodulation of a CPFSK-modulated signal,
   **characterized**

   - **in that** an n-th input data symbol ($d_n$) on which the CPFSK modulation is based is determined using an estimate of the n-1-th substitute symbol ($a_{n-1}$) which occurs in the linear approximation of the CPFSK, with the n-1-th substitute symbol ($a_{n-1}$) being estimated as a function of the previously determined n-1-th input data symbol ($d_{n-1}$).

2. Method as claimed in Claim 1,
   **characterized**

   - **in that** the n-1-th substitute symbol is estimated using the equation $â_{n-1} = â_{n-2} \exp\{j\pi\eta d_{n-1}\}$ where $â_{n-1}$ and $â_{n-2}$ are the estimation results for the n-1-th and n-2-th substitute symbols, respectively, $d_{n-1}$ is the determined n-1-th input data symbol and $\eta$ denotes the modulation index.

3. Method as claimed in one of Claims 1 or 2,
   **characterized**

   - **in that** the n-th input data symbol $d_n$ is determined on the basis of the phase angle of a currently obtained n-th complex-value sample symbol $y_n$ relative to the phase angle of the substitute symbol $â_{n-1}$ which is estimated for the n-1-th time step.

4. Method as claimed in Claim 3,
   **characterized**

- **in that** the n-th input data symbol $d_n$ is determined using the equation

$$\hat{d}_n = \begin{cases} 1 & \arg(\overline{y_n}) > \arg(\overline{\hat{a}_{n-1}}) \\ -1 & \arg(\overline{y_n}) < \arg(\overline{\hat{a}_{n-1}}) \end{cases}$$

where $\hat{d}_n$ is the determined n-th input data symbol $d_n$.

5. Method as claimed in one of the preceding claims,
**characterized**

- **in that** an equalizer, in particular a Viterbi equalizer, is used for determining the n-th input data symbol $d_n$.

6. Method as claimed in claim 5,
**characterized**

- **in that** the equalization is based on a trellis state diagram, in which the i-th channel state relating to the time step n is described by an L-tuple $Z_n^i = (z_n^{L-1,(i)}, .., z_n^{1,(i)}, z_n^{0,(i)})$, in which case the variables $z_n^{L-1,(i)}, .., z_n^{1,(i)}, z_n^{0,(i)}$ can each assume the possible values of the input data symbols $d_n$, and L denotes the channel memory.

7. Device for demodulation of a CPFSK-modulated signal,

- having an input data symbol decision device (ENT) for determining an n-th input data symbol ($d_n$) on which the CPFSK modulation is based,

   **characterized**

- **in that** the demodulator device (DMOD) has a substitute symbol estimation device (ESE) which estimates the n-1-th substitute symbol ($a_{n-1}$) which occurs in the linear approximation of the CPFSK as a function of the previously determined n-1-th input data symbol ($d_{n-1}$) and

- **in that** the input data symbol decision device (ENT) uses the estimated n-1-th substitute symbol ($\hat{a}_{n-1}$) for determining the n-th input data symbol ($d_n$).

8. Device as claimed in Claim 7,
**characterized**

- **in that** the substitute symbol estimation device (ESE) estimates the n-1-th substitute symbol ($a_{n-1}$) using the equation $\hat{a}_{n-1} = \hat{a}_{n-2} \exp\{j\pi\eta d_{n-1}\}$ where $\hat{a}_{n-1}$ and $\hat{a}_{n-2}$ are the estimation results for the n-1-th and n-2-th substitute symbol, respectively, $d_{n-1}$ is the determined n-1-th input data symbol, and $\eta$ denotes the modulation index.

9. Device as claimed in one of Claims 7 or 8,
**characterized**

- **in that** the input data symbol estimation device (ENT) determines the n-th input data symbol $d_n$ on the basis of the phase angle of a currently obtained n-th complex-value sample symbol $y_n$ relative to the phase angle of the substitute symbol $\hat{a}_{n-1}$ which is estimated for the n-1-th time step.

10. Device as claimed in one of Claims 7 to 9,
**characterized**

- **in that** the input data symbol estimation device (ENT) is an equalizer, in particular a Viterbi equalizer.

**Revendications**

1. Procédé de démodulation d'un signal à modulation par déplacement de fréquence à phase continue CPFSK,
**caractérisé par le fait que** la détermination d'un n-ème symbole de données d'entrée ($d_n$) à la base de la modulation CPFSK s'effectue à l'aide d'une estimation du n - 1-ème symbole de remplacement ($a_{n-1}$) apparaissant lors de l'approximation linéaire de la modulation CPFSK, l'estimation du n - 1-ème symbole de remplacement ($a_{n-1}$) s'effectuant en fonction du n - 1-ème symbole de données d'entrée ($d_{n-1}$) déterminé auparavant.

2. Procédé selon la revendication 1,
**caractérisé par le fait que** l'estimation du n - 1-ème symbole de remplacement s'effectue selon l'équation $\hat{a}_{n-1} = \hat{a}_{n-2} \exp\{j\pi\eta d_{n-1}\}$, $\hat{a}_{n-1}$ respectivement $\hat{a}_{n-2}$ étant les résultats estimés pour le n - 1-ème respectivement n - 2-ème symbole de remplacement, $d_{n-1}$ étant le n - 1-ème symbole de données d'entrée déterminé et $\eta$ étant l'indice de modulation.

3. Procédé selon l'une des revendications 1 ou 2,
**caractérisé par le fait que** la détermination du n-ème symbole de données d'entrée $d_n$ s'effectue à l'aide de la relation de phase d'un n-ème symbole échantillonné à valeur complexe $y_n$ actuellement obtenu par rapport à la relation de phase du symbole de remplacement $\hat{a}_{n-1}$ estimé à la n - 1-ème étape temporelle.

4. Procédé selon la revendication 3,
**caractérisé par le fait que** la détermination du n-ème symbole de données d'entrée $d_n$ s'effectue selon l'équation

$$\hat{d}_n = \begin{cases} 1 & \arg(y_n) > \arg(\hat{a}_{n-1}) \\ -1 & \arg(y_n) < \arg(\hat{a}_{n-1}) \end{cases}$$

$\hat{d}_n$ désignant le n-ème symbole de données d'entrée $d_n$ déterminé.

5. Procédé selon l'une des revendications précédentes,
**caractérisé par le fait qu'**on utilise pour la détermination du n-ème symbole de données d'entrée $d_n$ un égaliseur, notamment un égaliseur de Viterbi.

6. Procédé selon la revendication 5,
**caractérisé par le fait que** l'égalisation est basée sur un diagramme d'états en treillis dans lequel le i-ème état de canal à l'étape temporelle n est décrit par un vecteur à L variables $Z_n^i = (z_n^{L-1,(i)}, ..., z_n^{1,(i)}, z_n^{0,(i)})$, les variables $z_n^{L-1,(i)}, ..., z_n^{1,(i)}, z_n^{0,(i)}$ pouvant prendre à chaque fois les valeurs possibles du symbole de données d'entrée $d_n$ et L désignant la mémoire de canal.

7. Dispositif de démodulation d'un signal à modulation par déplacement de fréquence à phase continue CPFSK,

   - avec un dispositif de décision de symbole de données d'entrée (ENT) pour la détermination d'un n-ème symbole de données d'entrée ($d_n$) à la base de la modulation CPFSK,

   **caractérisé par le fait que**

   - le dispositif de démodulation (DMOD) comprend un dispositif d'estimation de symbole de remplacement (ESE) qui effectue une estimation du n - 1-ème symbole de remplacement ($a_{n-1}$) apparaissant lors de l'approximation linéaire de la modulation CPFSK en fonction du n - 1-ème symbole de données d'entrée ($d_{n-1}$) déterminé auparavant, et
   - le dispositif de décision de symbole de données d'entrée (ENT) exploite pour la détermination du n-ème symbole de données d'entrée ($d_n$) le n - 1-ème symbole de remplacement ($\hat{a}_{n-1}$) déterminé.

8. Dispositif selon la revendication 7,
**caractérisé par le fait que** le dispositif d'estimation de symbole de remplacement (ESE) effectue l'estimation du n - 1-ème symbole de remplacement ($a_{n-1}$) selon l'équation $\hat{a}_{n-1} = \hat{a}_{n-2} \exp\{j\pi\eta d_{n-1}\}$, $\hat{a}_{n-1}$ respectivement $\hat{a}_{n-2}$

étant les résultats estimés pour le n - 1-ème respectivement n - 2-ème symbole de remplacement, $\hat{d}_{n-1}$ étant le n - 1-ème symbole de données d'entrée déterminé et η étant l'indice de modulation.

9. Dispositif selon l'une des revendications 7 ou 8,
   **caractérisé par le fait que** le dispositif de décision de symbole de données d'entrée (ENT) détermine le n-ème symbole de données d'entrée $d_n$ à l'aide de la relation de phase d'un n-ème symbole échantillonné à valeur complexe $y_n$ actuellement obtenu par rapport à la relation de phase du symbole de remplacement $\hat{a}_{n-1}$ estimé à la n - 1-ème étape temporelle.

10. Dispositif selon l'une des revendications 7 à 9,
   **caractérisé par le fait que** le dispositif de décision de symbole de données d'entrée (ENT) est un égaliseur, notamment un égaliseur de Viterbi.

Fig.1

MOD

Fig.2
Stand der Technik

Fig.3a

Stand der Technik

Fig.3b

Fig.4a

Fig.4b

Fig.5

Fig.6